# EUROPÄISCHE PATENTSCHRIFT

(11) **EP 2 454 147 B1**
(45) Veröffentlichungstag und Bekanntmachung des Hinweises auf die Patenterteilung: **16.07.2014**
(21) Anmeldenummer: 10721492.6
(22) Anmeldetag: 25.05.2010
(51) Int. Cl.: B62D 15/02, B60W 30/06

(54) **VORRICHTUNG UND VERFAHREN ZUM UNTERSTÜTZTEN EINPARKEN EINES FAHRZEUGS**
DEVICE AND METHOD FOR THE SUPPORTED PARKING OF A VEHICLE
DISPOSITIF ET PROCÉDÉ POUR L'ASSISTANCE AU STATIONNEMENT D'UN VÉHICULE

(30) Priorität: 13.07.2009 DE 102009027650
(43) Veröffentlichungstag der Anmeldung: 23.05.2012
(73) Patentinhaber: Robert Bosch GmbH, 70442 Stuttgart (DE)
(72) Erfinder: SCHOENHERR, Michael, 70190 Stuttgart (DE); PAMPUS, Christian, 71229 Leonberg (DE); NIEMZ, Volker, 71277 Rutesheim (DE)
(86) Internationale Anmeldenummer: PCT/EP2010/057109
(87) Internationale Veröffentlichungsnummer: WO 2011/006705

(56) Entgegenhaltungen:
- WO-A1-2007/031379
- WO-A1-2010/139487
- DE-A1-102005 015 396
- DE-A1-102005 037 468
- DE-A1-102006 004 866
- DE-A1-102008 001 363
- JP-A- 2002 154 396
- US-A1- 2008 211 644

## Beschreibung

Die vorliegende Erfindung betrifft eine Vorrichtung und ein Verfahren zum unterstützten Einparken eines Fahrzeugs in eine Parklücke, aufweisend wenigstens eine Sensoreinrichtung, mit der eine Erkennung zumindest eines Objektes in einem Nahbereich des Fahrzeugs ermöglicht ist.

### Stand der Technik

Aus der DE 10 2005 037 468 A1 ist eine Vorrichtung zum unterstützten Einparken eines Fahrzeugs in eine Parklücke bekannt. Die Parklücke betrifft eine quer zum Fahrzeug angeordnete Parklücke, wobei die Sensoreinrichtung als Parklückenvermessungseinrichtung ausgeführt ist. Wird das Fahrzeug mit vorzugsweise geringer Geschwindigkeit an der Parklücke vorbeibewegt, kann die Sensoreinrichtung in Gestalt eines Radars, eines Ultraschallsensors oder eines LIDAR-Sensors die geometrische Ausgestaltung der Parklücke abscannen. Stoppt das Fahrzeug, kann die Vorrichtung anhand der Messdaten über die Parklücke Bewegungsbahnen bestimmen, um das Fahrzeug in die Parklücke einzuparken. Die durch die Vorrichtung bestimmten Bewegungsbahnen sind derart ausgeführt, dass das Fahrzeug möglichst einfach in die Parklücke bewegt werden kann. Dem Fahrer wird hierzu entweder die Bewegungsbahn angezeigt oder die Vorrichtung wirkt aktiv auf die Führung des Fahrzeugs ein, um dieses selbsttätig in die Parklücke einzuparken.

Während des Vorbeifahrens des Fahrzeugs an der Parklücke wird zumindest teilweise eine geometrische Vermessung der Parklücke vorgenommen. Bei dieser Vermessung kann gegebenenfalls nicht die vollständige Geometrie der Parklücke erfasst werden, so dass durch hinterlegte typische Parklückenmuster fehlende, nicht erfasste Bereiche, insbesondere hintere Bereiche der Parklücke, von der Sensoreinrichtung ergänzt werden. Ausgehend von der Vermessung der Parklücke und unter Berücksichtigung von festliegenden, durch das einzuparkende Fahrzeug selbst vorgegebenen Fahrzeuggeometriedaten werden mögliche Bewegungsbahnen zur Führung des Fahrzeugs in die Parklücke bestimmt.

Ein Nachteil einer derartigen Vorrichtung liegt jedoch darin, dass die Sensoreinrichtung einen begrenzten Sensorbereich aufweist, und fehlende, nicht erfassbare Bereiche auch außerhalb der Parklücke der Vorrichtung nicht als Eingangsdaten zur Verfügung gestellt werden können. Sofern das Fahrzeug nicht weiter an der Parklücke vorbeigeführt wird, kann die Sensoreinrichtung lediglich den Nahbereich, der den unmittelbaren Bereich um das Fahrzeug herum beschreibt, der durch die Sensoreinrichtung erfasst wird, auswerten. Stellt die Vorrichtung nunmehr Bewegungsbahnen bereit, die über den Nahbereich hinausgehen, so kann der Fall eintreten, dass die Vorrichtung eine Bewegungsbahn vorgibt, die zu einer Kollision des Fahrzeugs mit Objekten führen kann, die vom System nicht erfasst worden sind.

Aus der DE-A-102 005 015 396 ist eine Vorrichtung nach dem Oberbegriff des Anspruchs 1 und ein Verfahren nach dem Oberbegriff des Anspruchs 8 bekannt.

### Offenbarung der Erfindung

Es ist die Aufgabe der vorliegenden Erfindung, eine Vorrichtung zum unterstützten Einparken eines Fahrzeugs in eine Parklücke zu schaffen, die eine mögliche Kollision mit nicht erfassten Objekten des Fahrzeugs vermeidet.

Diese Aufgabe wird ausgehend von einer Vorrichtung zum unterstützten Einparken eines Fahrzeugs in eine Parklücke gemäß dem Oberbegriff des Anspruches 1 sowie einem Verfahren hierzu gemäß Anspruch 8 in Verbindung mit den jeweils kennzeichnenden Merkmalen gelöst. Vorteilhafte Weiterbildungen der Erfindung sind in den abhängigen Ansprüchen angegeben.

Die Vorrichtung ist zur numerischen Bestimmung des Vorhandenseins wenigstens eines Objektes in einem Fernbereich des Fahrzeugs ausgebildet, derart, dass die numerische Bestimmung des Objektes im Fernbereich auf Grundlage eines erkannten Objektes im Nahbereich erfolgt.

Eine Parklücke ist im Straßenverkehr häufig an wiederkehrende Umgebungssituationen geknüpft. Erkennt der Fahrer eines Fahrzeugs eine Parklücke und führt dieser das Fahrzeug langsam an der Parklücke vorbei, derart, dass die Sensoreinrichtung die Parklücke vermessen kann, so ist die Parklücke häufig durch weitere Fahrzeuge oder eine bauliche Umgebung begrenzt. Erkennt die Sensoreinrichtung Objekte im Nahbereich des Fahrzeugs, so kann mit Wahrscheinlichkeit angenommen werden, dass sich die Objekte entweder innerhalb eines Fernbereiches wiederholen oder sich kontinuierlich in den Fernbereich hinein erstrecken, beispielsweise betreffend eine bauliche Umgebung wie eine Mauer, ein Bordstein, eine Fahrbahnbegrenzung oder dergleichen.

Wird innerhalb des Nahbereiches kein entsprechendes Objekt erkannt, so kann angenommen werden, dass sich auch im Fernbereich kein entsprechendes Objekt befindet. Erkennt die Sensoreinrichtung jedoch innerhalb des Nahbereiches zumindest ein Objekt, das zudem auch noch eine gewisse Position aufweist, so wird erfindungsgemäß vorgeschlagen, durch die Vorrichtung ein Abbild aus dem Nahbereich in den Fernbereich zu übertragen, indem angenommen wird, dass sich die im Nahbereich erkannten Objekte im Fernbereich wiederholen bzw. sich in diese hinein erstrecken. Folglich kann die Unterstützung des Einparkens des Fahrzeugs in die Parklücke nicht nur auf Grundlage der erkannten Objekte innerhalb eines Nahbereiches erfolgen, sondern die Vorrichtung kann ferner die Unterstützung des Einparkens auch unter Berücksichtigung angenommener Objekte im Fernbereich vornehmen.

Der Nahbereich ist durch den Bereich bestimmt, innerhalb dessen mit der Sensoreinrichtung Objekte erkennbar sind und wobei der Fernbereich den Bereich um und insbesondere vor dem Fahrzeug in Fahrtrichtung betrifft, der außerhalb der Reichweite der Sensoreinrichtung liegt. Insbesondere dann, wenn der Fahrer das Fahrzeug lediglich so weit an der Parklücke vorbeiführt, bis die Objekte innerhalb des Nahbereiches erkannt sind, kann die Sensoreinrichtung den Bereich vor dem Fahrzeug nicht abscannen. Die numerische Bestimmung von Objekten vor dem Fahrzeug ist daher von besonderer Bedeutung, da dieser Bereich, vorliegend der Fernbereich, für das unterstützte Einparken des Fahrzeugs in die Parklücke gegebenenfalls benötigt und vom Fahrzeug befahren wird.

Die Parklücke kann auf einer Seite der Bewegungsrichtung des Fahrzeugs vorhanden sein, wobei die Parklücke entweder eine Längsparklücke, eine Diagonalparklücke oder eine Querparklücke betreffen kann. Dabei kann vorgesehen sein, dass das erkannte und das angenommene Objekt auf der der Parklücke gegenüberliegenden Seite der Bewegungsrichtung des Kraftfahrzeugs vorhanden ist. Befindet sich die Parklücke beispielsweise auf der rechten Seite der Bewegungsrichtung des Fahrzeugs, so kann die Sensoreinrichtung derart ausgebildet sein, dass nicht nur der rechtsseitige Bereich des Kraftfahrzeugs abgescannt wird, sondern auch der gegenüberliegende, linksseitige Bereich. Folglich können sich die erkannten und die angenommenen Objekte auf der der Parklücke gegenüberliegenden Seite der Bewegungsrichtung des Fahrzeugs befinden. Die Objekte können beispielsweise parkende Fahrzeuge und/oder bauliche Einrichtungen sein. Fährt beispielsweise das Fahrzeug langsam an einer Parklücke vorbei, die sich auf der rechten Seite der Bewegungsrichtung des Fahrzeugs befindet, wird zugleich der Nahbereich auf der linken Seite des Fahrzeugs, beispielsweise auf der gegenüberliegenden Straßenseite, abgescannt. Erkennt die Sensoreinrichtung Objekte auf der linken Seite der Bewegungsrichtung des Fahrzeugs, so bilden diese Objekte eine Grundlage zur Bestimmung des Fernbereiches, in dem angenommen wird, dass sich nicht nur im Nahbereich Objekte auf der der Parklücke gegenüberliegenden Seite befinden, sondern auch im Fernbereich. Im Ergebnis kann die Vorrichtung die Züge zum Einparken derart ausbilden, dass eine Kollision des Fahrzeugs mit den erkannten Objekten im Nahbereich als auch mit angenommenen Objekten im Fernbereich vermieden wird.

Um das Einparken des Fahrzeugs in die Parklücke zu unterstützen, kann durch die Vorrichtung wenigstens eine Bewegungsbahn zum Einparken des Fahrzeugs in die Parklücke bestimmt und dem Fahrer des Fahrzeugs angegeben werden. Erfindungsgemäß ist nun vorgesehen, dass die wenigstens eine Bewegungsbahn durch die Vorrichtung derart bestimmt bzw. modifiziert ist, dass eine Kollision des Fahrzeugs mit einem angenommenen Objekt im Fernbereich vermieden ist. Grundsätzlich ist bekannt, eine Kollision mit erkannten Objekten im Nahbereich zu vermeiden. Über diesen Stand der Technik hinausgehend kann jedoch die numerische Bestimmung von möglichen Objekten im Fernbereich dazu dienen, die Bewegungsbahnen allein auf Grundlage der Annahme von Objekten im Fernbereich so auszulegen, dass eine Kollision des Fahrzeugs mit den angenommenen Objekten vermieden wird. Die Position und Anordnung der Objekte im Fernbereich wird dabei auf Grundlage der Position und Anordnung des oder der Objekte im Nahbereich angenommen. Parken beispielsweise mehrere Fahrzeuge auf der der Parklücke gegenüberliegenden Seite der Fahrbahn nebeneinander und detektiert die Sensoreinrichtung durch das Abscannen des Nahbereiches diese Fahrzeuge, so kann durch die Vorrichtung der Fernbereich bestimmt werden, indem angenommen wird, dass sich die Fahrzeugreihe vom Nahbereich in den Fernbereich fortsetzt. Befindet sich beispielsweise eine bauliche Einrichtung wie eine Mauer, eine Fahrbahnbegrenzung oder dergleichen im Nahbereich und erfasst die Sensoreinrichtung dieses Objekt, so wird durch die Vorrichtung ein Fernbereich bestimmt, indem angenommen wird, dass sich diese bauliche Einrichtung in den Fernbereich hineinerstreckt. Folglich wird die Vorrichtung Bewegungsbahnen vorschlagen bzw. ausführen, die derart bestimmt sind, dass eine Kollision des Fahrzeugs mit den Objekten sowohl im Nahbereich als auch im Fernbereich vermieden wird.

Weiterführend kann vorgesehen sein, dass die Vorrichtung ein Anzeigemittel umfasst, das zur Anzeige von erkannten Objekten im Nahbereich und von angenommenen Objekten im Fernbereich ausgeführt ist. Damit erhält der Fahrer des Fahrzeugs eine Information über erfasste und durch numerische Bestimmung im Fernbereich angenommene Objekte. Auf dem Anzeigemittel können ferner die Bewegungsbahnen angezeigt werden, die durch die Vorrichtung zum Einparken des Fahrzeugs in die Parklücke bestimmt werden. Folglich erhält der Fahrer einen Überblick über angenommene Objekte im Fernbereich, die in Zusammenschau mit den bestimmten Bewegungsbahnen angezeigt werden.

Weiterführend umfasst die Vorrichtung ein Eingabemittel, über das der Fahrer das Vorhandensein von angenommenen Objekten im Fernbereich an die Vorrichtung bestätiget. Dabei kann das Eingabemittel und das Anzeigemittel gemeinsam durch ein Sensorbildschirm im Bereich des Fahrers im Fahrzeug ausgeführt sein, das sowohl zur Anzeige der Bewegungsbahnen und der Objekte im Nah- und Fernbereich als auch als Eingabemittel dienen kann. Nimmt das System Objekte im Fernbereich an, die durch vorhandene Objekte im Nahbereich numerisch bestimmt sind, so kann der Fahrer das Fahrzeug entlang der auf Basis der vorhandenen Objekte bestimmten Bewegungsbahnen in die Parklücke führen. Diese können jedoch aufwendiger ausfallen als Bewegungsbahnen ohne Objekte im Fernbereich. Befinden sich im Fernbereich trotz vorhandener Objekte im Nahbereich jedoch keine Objekte und kann der Fahrer dies erkennen, so kann über das Eingabemittel der Vorrichtung das Nichtvorhandensein von Objekten im Fernbereich angegeben werden. Folglich können die Bewegungsbahnen neu bestimmt werden, die gegebenenfalls einfacher ausfallen als bei Vorhandensein der Objekte im Fernbereich.

Die vorliegende Erfindung betrifft ferner ein Verfahren zum unterstützen Einparken eines Fahrzeugs in eine Parklücke mit zumindest den folgenden Schritten: Erkennung eines Objektes in einem Nahbereich des Fahrzeugs mit wenigstens einer Sensoreinrichtung, Bestimmung des Vorhandenseins von zumindest einem Objekt in einem Fernbereich des Fahrzeugs, derart, dass die Bestimmung des Objektes im Fernbereich auf Grundlage eines bestimmten Objektes im Nahbereich numerisch vorgenommen wird und wobei der Fahrer das Vorhandensein eines Objekts im Fernbereich bestätigt. Weiterführend kann die Vorrichtung wenigstens eine Bewegungsbahn zum Einparken des Fahrzeugs in die Parklücke bestimmen und für den Fahrer des Fahrzeugs angeben. Die Bestimmung der Bewegungsbahn zum Einparken des Fahrzeugs wird dabei durch die Vorrichtung auf Grundlage von bestimmten Objekten im Nahbereich als auch von den angenommenen Objekten im Fernbereich vorgenommen. Im Ergebnis kann die wenigstens eine Bewegungsbahn durch die Vorrichtung derart bestimmt werden, dass eine Kollision des Fahrzeugs mit einem angenommenen Objekt im Fernbereich vermieden wird.

Weitere, die Erfindung verbessernde Maßnahmen werden nachstehend gemeinsam mit der Beschreibung eines bevorzugten Ausführungsbeispieles der Erfindung anhand der Figuren näher dargestellt. Es zeigt:
- Figur 1: eine schematische Ansicht einer Parksituation mit einem Fahrzeug und einer Parklücke,
- Figur 2a: eine Parksituation eines Fahrzeugs mit einer Parklücke, wobei eine erste Bewegungsbahn und eine zweite Bewegungsbahn angegeben sind, und wobei im Nahbereich und im Fernbereich keine Objekte vorhanden sind,
- Figur 2b: eine schematische Ansicht gemäß Figur 2a, wobei im Nahbereich und im Fernbereich ein Objekt vorhanden ist,
- Figur 3: eine Parksituation mit einem Fahrzeug, das entlang einer Bewegungsrichtung sowohl an der Parklücke als auch an Objekten im Nahbereich vorbeigeführt wird, die durch eine Sensoreinrichtung detektiert werden,
- Figur 4a: eine Parksituation eines Fahrzeugs zum Einparken in eine Parklücke mit einem Objekt, das im Nahbereich vorhanden ist und
- Figur 4b: die Parksituation gemäß Figur 4a, wobei im Nahbereich kein Objekt vorhanden ist, das von der Sensoreinrichtung erfasst wird.

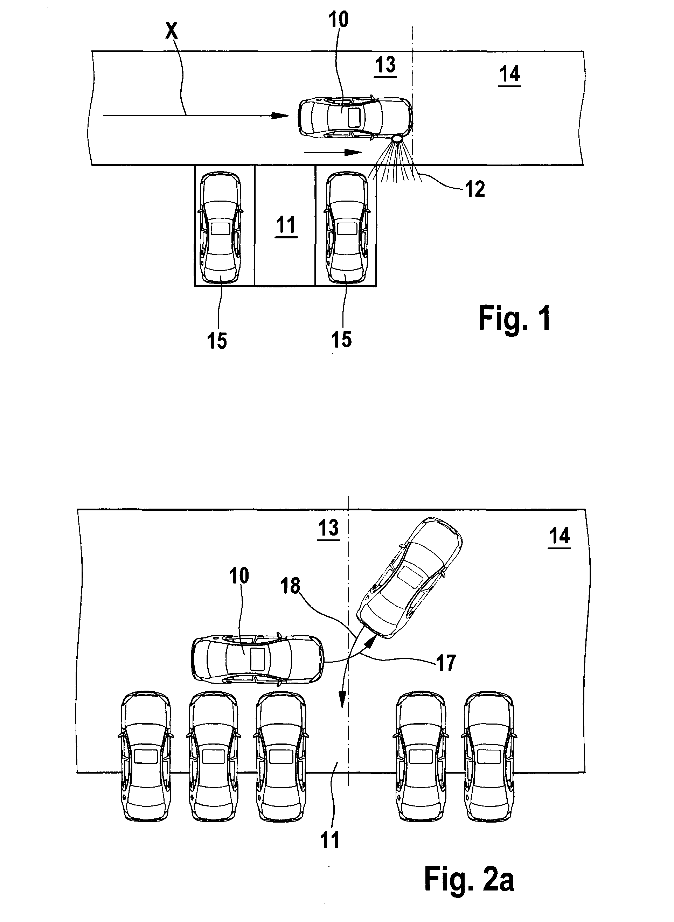

Figur 1 zeigt schematisch eine Parksituation in einer Draufsicht zur Erläuterung der Erkennung einer Parklücke durch eine Sensoreinrichtung 12. Ein Fahrzeug 10 wird entlang einer Bewegungsrichtung X bewegt, wobei die Bewegung auf einer Straße erfolgen kann, sodass seitlich zur Straße Parklücken 11 vorhanden sind. Die Sensoreinrichtung 12 ist rechtsseitig am Fahrzeug 10 angebracht. Wird das Fahrzeug 10 langsam an den Objekten 15, vorliegend parkende Autos, die die Parklücke 11 begrenzen, vorbeigeführt, so erkennt die Sensoreinrichtung 12 die parkenden Autos 15. Als Sensoreinrichtung kann auch LIDAR-Technologie oder Ultraschall-Technologie verwendet werden. Die Sensoreinrichtung 12 basiert auf einem Radar oder einer Infrarotmesseinrichtung, so dass die Vorrichtung vorhandene Objekte neben dem Fahrzeug erkennt. Wird das Fahrzeug 10 entlang der Bewegungsrichtung X bewegt, wird zunächst das linke Fahrzeug 15 erkannt, worauf die Parklücke 11 folgt. Rechtsseitig ist die Parklücke 11 durch das weitere Fahrzeug 15 begrenzt, das anschließend durch die Sensoreinrichtung 12 detektiert wird. Im Ergebnis erhält die Vorrichtung eine Information über das Vorhandensein der Parklücke 11. Nachdem das rechte Fahrzeug 15 durch die Sensoreinrichtung 12 erkannt wurde, kann der Fahrer das Fahrzeug 10 anhalten. Im Ergebnis hat jedoch die Sensoreinrichtung 12 lediglich einen Nahbereich 13 erkannt, wobei in einem Fernbereich 14 keine Erkennung von Objekten erfolgen kann, da die Sensoreinrichtung 12 in den Fernbereich 14 nicht hineinbewegt wird.

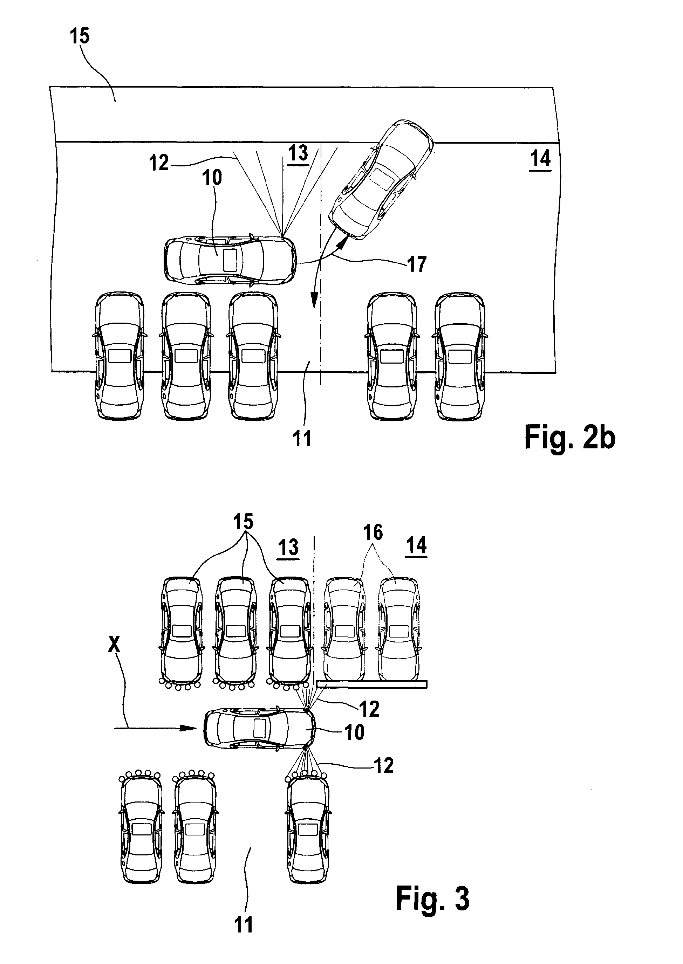

Die Figuren 2a und 2b zeigen eine Parksituation, wobei das Fahrzeug 10 bereits an der Parklücke 11 vorbei geführt wurde und die Vorrichtung Bewegungsbahnen 17 und 18 bestimmt und dem Fahrer angegeben hat, um das Fahrzeug 10 in die Parklücke 11 einzuparken. In der Figur 2a befindet sich kein weiteres Objekt 15 auf der der Parklücke 11 gegenüberliegenden Seite, wohingegen in Figur 2b ein Objekt 15 gezeigt ist, das sich sowohl im

Nahbereich 13 als auch im Fernbereich 14 befindet. Sensiert das Fahrzeug 10 lediglich das Objekt 15 im Nahbereich 13, so kann gemäß dem Stand der Technik die Vorrichtung nicht erkennen, dass sich das Objekt 15 auch in den Fernbereich 14 fortsetzt. Gemäß Figur 2b wird es folglich zu einer Kollision des Fahrzeugs 10 mit dem Objekt 15 führen, sofern der Fahrer die erste Bewegungsbahn 17 ausführt.

Figur 3 zeigt ein weiteres Beispiel einer Parksituation zum Einparken eines Fahrzeugs 10 in eine Parklücke 11. Die Sensoreinrichtung 12 ist sowohl an der rechten Fahrzeugseite als auch an der linken Fahrzeugseite vorhanden. Wird das Fahrzeug 10 entlang der Bewegungsrichtung X bis zur gezeigten Position an der Parklücke 11 vorbeigeführt, so kann die Sensoreinrichtung 12 das Vorhandensein der Parklücke 11 bestimmen, wobei die Sensoreinrichtung 12 ferner die Objekte 15 im Nahbereich 13 auf der der Parklücke gegenüberliegenden Seite bestimmen kann. Erfindungsgemäß ist die Vorrichtung zur numerischen Bestimmung des Vorhandenseins wenigstens eines Objektes 16 im gezeigten Fernbereich 14 des Fahrzeugs 10 ausgebildet, derart, dass die numerische Bestimmung der Objekte 16 im Fernbereich 14 auf Grundlage der erkannten Objekte 15 im Nahbereich 13 erfolgt.

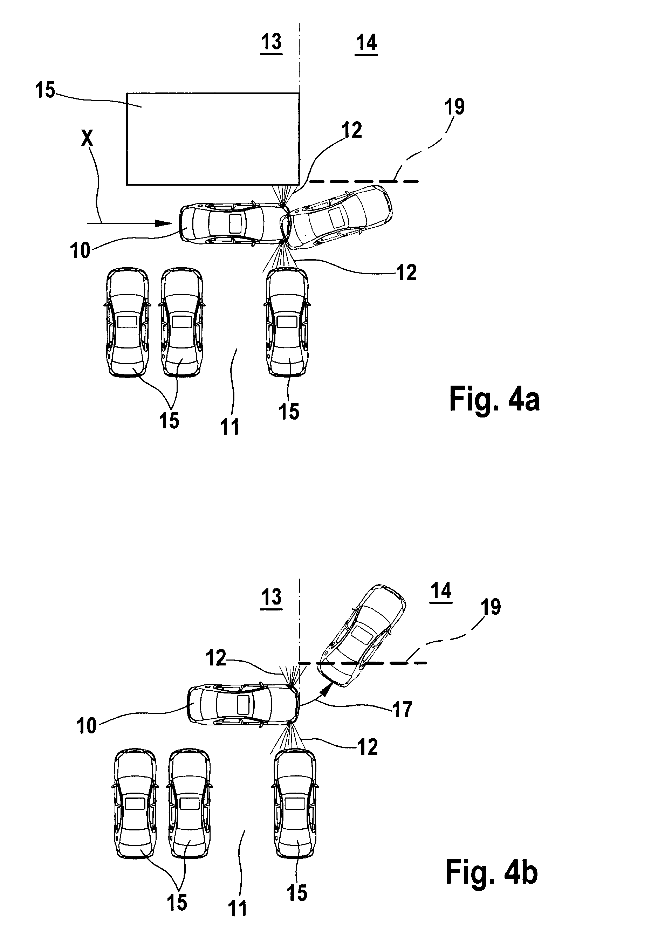

Da die Sensoreinrichtung 12 die Fahrzeuge 15 auf der linken Seite der Bewegungsrichtung X erkennt, erfolgt durch numerische Bestimmung die Annahme des Vorhandenseins der Objekte 16, ohne dass die Sensoreinrichtung 12 das Vorhandensein der Objekte 16 aktiv erfasst. Der Fahrer wird das Fahrzeug nicht weiter über die Parklücke 11 hinaus bewegen, da damit weitere Verkehrsteilnehmer annehmen könnten, dass der Fahrer die Parklücke 11 nicht belegen möchte. Folglich ergibt sich aus der erfindungsgemäßen numerischen Bestimmung des Vorhandenseins der Objekte 16 auch ohne einen Scannvorgang durch Vorbeiführen der Sensoreinrichtung 12 an den Objekten 16 im Fernbereich 14 der Vorteil, dass der Fahrer das Fahrzeug 10 nicht wesentlich über die Parklücke 11 entlang der Bewegungsrichtung X hinaus bewegen muss. Im Ergebnis wird die Vorrichtung Bewegungsbahnen 17 und 18 vorschlagen, die derart bestimmt sind, dass eine Kollision des Fahrzeugs 10 mit den Objekten 16 im Fernbereich 14 nicht auftreten kann, wie dies in den Figuren 4a und 4b schematisch näher dargestellt ist.

Die Figuren 4a und 4b zeigen wiederum eine Parksituation zum Einparken eines Fahrzeugs 10 in eine Parklücke 11. Das Fahrzeug 10 detektiert in Figur 4a sowohl rechtsseitig parkende Fahrzeuge 15 als auch ein Objekt 15 auf der linken Seite der Bewegungsrichtung X. Aufgrund des Vorhandenseins eines Objektes 15 im Nahbereich 13 bestimmt die Vorrichtung eine angenommene Hindernisgrenze 19, da Objekte 16 im Fernbereich 14 auf der linken Seite der Bewegungsrichtung X durch die Vorrichtung numerisch bestimmt werden. Jedoch bestimmt das System die angenommene Hindernisgrenze 19 auch dann, wenn Objekte 15 im Fernbereich 14 nicht vorhanden sind, siehe Darstellung in Figur 4a. Detektiert die Sensoreinrichtung 12 gemäß der Darstellung in Figur 4b auf der linken Seite der Bewegungsrichtung X keine Objekte 15, so schlägt die Vorrichtung eine erste Bewegungsbahn 17 vor, die über die angenommene Hindernisgrenze 19 hinaus geht, da aufgrund gegebener Wahrscheinlichkeit hinter der Hindernisgrenze 19 kein Objekt 16 vorhanden ist.

Die vorliegende Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein. Beispielsweise kann weiterführend vorgesehen sein, auf dem Anzeigemittel die Objekte 16 im Fernbereich 14 andersfarbig oder blinkend darzustellen. Das Verfahren kann ferner ein Abfrageschritt umfassen, in dem die Vorrichtung den Fahrer des Fahrzeugs 10 über das Anzeigemittel abfragt, ob tatsächlich Objekte 16 im Fernbereich 14 vorhanden sind.

Weiterhin kann vorgesehen sein, dass die Sensoreinrichtung 12 ein gewisses Objektmuster auf der linken Seite der Bewegungsrichtung X detektiert, was beispielsweise dann der Fall ist, wenn an Straßenbegrenzungen Fahrzeuge in vorgegebenen Abständen parken. Parktaschen können auch durch bauliche Einrichtungen regelmäßig unterbrochen werden, so dass durch die Vorrichtung die im Nahbereich 13 detektierte Umgebung durch die Objekte 15 in den Fernbereich hineinberechnet werden. Insbesondere sei angemerkt, dass die Angaben über die rechte und linke Seite der Bewegungsrichtung X auch gegeneinander austauschbar sind. Folglich kann sich die Parklücke 11 auch auf der linken Seite der Bewegungsrichtung X des Fahrzeugs 10 befinden, so dass durch die erfindungsgemäße Bestimmung der Fernbereich 14 und die sich hierin befindenden Objekte 16 auch auf der rechten Seite der Bewegungsrichtung X vorhanden sein können. Eine Bewegungsbahn 17 und 18, auch als Trajektorie bezeichnet, kann folglich sowohl zum Linksausscheren als auch zum Rechtsausscheren vorgesehen sein, wobei die Parklücke 11 nicht grundsätzlich eine Querparklücke betreffen muss, sondern auch eine Längsparklücke oder eine Diagonalparklücke betreffen kann.

## Patentansprüche

1. Vorrichtung zum unterstützten Einparken eines Fahrzeugs (10) in eine Parklücke (11), aufweisend wenigstens eine Sensoreinrichtung (12), mit der eine Erkennung zumindest eines Objektes (15) in einem Nahbereich (13) des Fahrzeugs (10) ermöglicht ist, wobei
die Vorrichtung zur numerischen Bestimmung des Vorhandenseins wenigstens eines Objektes (16) in einem Fernbereich (14) des Fahrzeugs (10) ausgebildet ist, derart, dass die numerische Bestimmung des Objektes (16) im Fernbereich (14) auf Grundlage des erkannten Objektes (15) im Nahbereich (13) erfolgt **dadurch gekennzeichnet, dass** die Vorrichtung ein Eingabemittel umfasst, über das der Fahrer das Vorhandensein von angenommenen Objekten (16) im Fernbereich (14) an die Vorrichtung bestätigen kann.

2. Vorrichtung nach Anspruch 1, **dadurch gekennzeichnet, dass** der Nahbereich (13) durch den Bereich bestimmt ist, in dem mit der Sensoreinrichtung (12) Objekte (15) erkennbar sind und wobei der Fernbereich (14) den Bereich um und insbesondere vor dem Fahrzeug (10) in Fahrtrichtung betrifft, der außerhalb der Reichweite der Sensoreinrichtung (12) liegt.

3. Vorrichtung nach einem der Ansprüche 1 und 2, **dadurch gekennzeichnet, dass** die Parklücke (11) auf einer Seite einer Bewegungsrichtung (X) des Fahrzeugs (10) vorhanden ist, wobei das erkannte Objekt (15) und das Objekt (16) in einem Fernbereich (14) auf der der Parklücke (11) gegenüberliegenden Seite der Bewegungsrichtung (X) des Fahrzeugs (10) vorhanden ist.

4. Vorrichtung nach einem der vorgenannten Ansprüche, **dadurch gekennzeichnet, dass** die Objekte (15, 16) durch parkende Fahrzeuge und/oder eine bauliche Einrichtung gebildet sind.

5. Vorrichtung nach einem der vorgenannten Ansprüche, **dadurch gekennzeichnet, dass** wenigstens eine Bewegungsbahn (17, 18) zum Einparken des Fahrzeugs (10) in die Parklücke (11) durch die Vorrichtung bestimmbar und für den Fahrer des Fahrzeugs (10) angebbar ist.

6. Vorrichtung nach Anspruch 5, **dadurch gekennzeichnet, dass** die wenigstens eine Bewegungsbahn (17, 18) durch die Vorrichtung derart bestimmt ist, dass eine Kollision des Fahrzeugs (10) mit einem angenommenen Objekt (16) im Fernbereich vermieden ist.

7. Vorrichtung nach einem der vorgenannten Ansprüche, **dadurch gekennzeichnet, dass** die Vorrichtung ein Anzeigemittel umfasst, das zur Anzeige von erkannten Objekten (15) im Nahbereich (13) und von angenommenen Objekten im Fernbereich (14) ausgeführt ist.

8. Verfahren zum unterstützten Einparken eines Fahrzeugs (10) in eine Parklücke (11) mit zumindest den folgenden Schritten:
- Erkennung eines Objektes (15) in einem Nahbereich (13) des Fahrzeugs (10) mit wenigstens einer Sensoreinrichtung (12),
- Bestimmung des Vorhandenseins von zumindest einem Objekt (16) in einem Fernbereich (14) des Fahrzeugs (10),
- derart, dass die Bestimmung des Objektes (16) im Fernbereich (14) auf Grundlage des bestimmten Objektes (15) im Nahbereich (13) numerisch vorgenommen wird, und **gekennzeichnet dadurch, dass** der Fahrer das Vorhandensein von angenommenen Objekten (16) im Fembereich (14) bestätigt.

9. Verfahren nach Anspruch 8, **dadurch gekennzeichnet, dass** wenigstens eine Bewegungsbahn (17, 18) zum Einparken des Fahrzeugs (10) in die Parklücke (11) durch die Vorrichtung bestimmt wird und für den Fahrer des Fahrzeugs (10) angeben wird.

10. Verfahren nach Anspruch 8 oder 9, **dadurch gekennzeichnet, dass** die wenigstens eine Bewegungsbahn (17, 18) durch die Vorrichtung derart bestimmt wird, dass eine Kollision des Fahrzeugs (10) mit einem angenommenen Objekt (16) im Fernbereich vermieden wird.

## Claims

1. Device for the assisted parking of a vehicle (10) in a parking space (11), having at least one sensor device (12) with which detection of at least one object (15) in the close range (13) of the vehicle (10) is made possible, wherein the device is designed to perform numerical determination of the presence of at least one object (16) in the long range (14) of the vehicle (10), such that the numerical determination of the object (16) in the long range (14) is carried out on the basis of the detected object (15) in the close range (13), **characterized in that** the device comprises an input means which the driver can use to confirm to the device the presence of assumed objects (16) in the long range (14).

2. Device according to Claim 1, **characterized in that** the close range (13) is determined by the range in which objects (15) can be detected with the sensor device (12), and wherein the long range (14) relates to the region around, and in particular in front of, the vehicle (10) in the direction of travel, which region lies outside the range of the sensor device (12).

3. Device according to one of Claims 1 and 2, **characterized in that** the parking space (11) is present on one side of a direction (X) of movement of the vehicle (10), wherein the detected object (15) and the object (16) in a long range (14) are present on the side of the direction (X) of movement of the vehicle (10) lying opposite the parking space (11).

4. Device according to one of the preceding claims, **characterized in that** the objects (15, 16) are formed by parked vehicles and/or a structural installation.

5. Device according to one of the preceding claims, **characterized in that** at least one movement path (17, 18) for parking the vehicle (10) in the parking space (11) can be determined by means of the device and can be specified for the driver of the vehicle (10).

6. Device according to Claim 5, **characterized in that** the at least one movement path (17, 18) is determined by the device in such a way that a collision of the vehicle (10) with an assumed object (16) in the long range is avoided.

7. Device according to one of the preceding claims, **characterized in that** the device comprises a display means which is configured to display detected objects (15) in the close range (13) and assumed objects in the long range (14).

8. Method for the assisted parking of a vehicle (10) in a parking space (11) having at least the following steps:
- detection of an object (15) in the close range (13) of the vehicle (10) with at least one sensor device (12),
- determination of the presence of at least one object (16) in the long range (14) of the vehicle (10),
- such that the determination of the object (16) in the long range (14) is performed numerically on the basis of the determined object (15) in the close range (13), and **characterized in that** the driver confirms the presence of assumed objects (16) in the long range (14).

9. Method according to Claim 8, **characterized in that** at least one movement path (17, 18) for parking the vehicle (10) in the parking space (11) is determined by the device and is specified to the driver of the vehicle (10).

10. Method according to Claim 8 or 9, **characterized in that** the at least one movement path (17, 18) is determined by the device in such a way that a collision of the vehicle (10) with an assumed object (16) in the long range is avoided.

## Revendications

1. Dispositif pour l'assistance au stationnement d'un véhicule (10) sur une place de stationnement (11), comportant au moins un dispositif de détection (12) permettant d'identifier au moins un objet (15) dans une zone proche (13) du véhicule (10), le dispositif étant réalisé pour déterminer de façon numérique la présence d'au moins un objet (16) dans une zone éloignée (14) du véhicule (10), de telle sorte que la détermination numérique de l'objet (16) dans la zone éloignée (14) se produise sur la base de l'objet (15) détecté dans la zone proche (13), **caractérisé en ce que** le dispositif comprend un moyen de saisie via lequel le conducteur peut confirmer au dispositif la présence des objets (16) présumés dans la zone éloignée (14).

2. Dispositif selon la revendication 1, **caractérisé en ce que** la zone proche (13) est définie par la zone dans laquelle des objets (15) peuvent être identifiés à l'aide du dispositif de détection (12) et la zone éloignée (14) correspondant à la zone entourant le véhicule (10) et notamment la zone située devant le véhicule dans la direction de conduite, se trouvant à l'extérieur de la portée du dispositif de détection (12).

3. Dispositif selon l'une quelconque des revendications 1 et 2, **caractérisé en ce que** la place de stationnement (11) est présente sur un côté d'une direction de déplacement (X) du véhicule (10), l'objet (15) détecté et l'objet (16) se trouvant dans une zone éloignée (14) étant présents sur le côté de la direction de déplacement (X) du véhicule (10) opposé à la place de stationnement (11).

4. Dispositif selon l'une quelconque des revendications précédentes, **caractérisé en ce que** les objets (15, 16) sont formés par des véhicules stationnés et/ou un élément en dur.

5. Dispositif selon l'une quelconque des revendications précédentes, **caractérisé en ce qu'**au moins une trajectoire (17, 18) peut être déterminée par le dispositif et être fournie au conducteur du véhicule (10) pour stationner le véhicule (10) sur la place de stationnement (11).

6. Dispositif selon la revendication 5, **caractérisé en ce que** l'au moins une trajectoire (17, 18) est déterminée de telle sorte par le dispositif qu'une collision du véhicule (10) avec un objet (16) présumé dans la zone éloignée est évitée.

7. Dispositif selon l'une quelconque des revendications précédentes, **caractérisé en ce que** le dispositif comprend un moyen d'affichage réalisé pour afficher les objets (15) détectés dans la zone proche (13) et les objets présumés dans la zone éloignée (14).

8. Procédé pour l'assistance au stationnement d'un véhicule (10) sur une place de stationnement (11) avec au moins les étapes suivantes :
- détection d'un objet (15) dans une zone proche (13) du véhicule (10) à l'aide d'au moins un dispositif de détection (12) ;
- détermination de la présence d'au moins un objet (16) dans une zone éloignée (14) du véhicule (10) ;
- de telle sorte que la détermination de l'objet (16) dans la zone éloignée (14) est effectuée de façon numérique sur la base de l'objet (15) déterminé dans la zone proche (13) ; et
**caractérisé en ce que** le conducteur confirme la présence des objets (16) présumés dans la zone éloignée (14).

9. Procédé selon la revendication 8, **caractérisé en ce qu'**au moins une trajectoire (17, 18) est déterminée par le dispositif et fournie au conducteur du véhicule (10) pour stationner le véhicule (10) sur la place de stationnement (11).

10. Procédé selon la revendication 8 ou 9, **caractérisé en ce que** l'au moins une trajectoire (17, 18) est déterminée par le dispositif de telle sorte qu'une collision du véhicule (10) avec l'objet (16) supposé dans la zone éloignée est évitée.
